# EUROPÄISCHE PATENTSCHRIFT

(11) **EP 2 066 205 B1**
(45) Veröffentlichungstag und Bekanntmachung des Hinweises auf die Patenterteilung: **01.02.2012**
(21) Anmeldenummer: 07802911.3
(22) Anmeldetag: 27.08.2007
(51) Int. Cl.: A47J 43/07

(54) **ZUBEREITUNGSBECHER MIT SCHUTZEINRICHTUNG**
PREPARATION JUG WITH PROTECTIVE DEVICE
RÉCIPIENT DE PRÉPARATION COMPRENANT UN DISPOSITIF DE PROTECTION

(30) Priorität: 13.09.2006 DE 102006042988
(43) Veröffentlichungstag der Anmeldung: 10.06.2009
(73) Patentinhaber: BSH Bosch und Siemens Hausgeräte GmbH, 81739 München (DE)
(72) Erfinder: BRECKO, Ales, 1241 Kamnik (SI); BLAGOTINSEK, Andrej, 2380 Slovenj Gradec (SI)
(86) Internationale Anmeldenummer: PCT/EP2007/058871
(87) Internationale Veröffentlichungsnummer: WO 2008/031715

(56) Entgegenhaltungen:
- WO-A-2005/084504
- DE-B- 1 179 674

## Beschreibung

### Hintergrund der Erfindung

Die vorliegende Erfindung betrifft einen Zubereitungsbecher, insbesondere für die Zubereitung von Lebensmitteln in der Küche, der an eine Antriebseinheit ankuppelbar ist, gemäß dem Oberbegriff des Anspruchs 1.

### Stand der Technik

Aus der internationalen Offenlegungsschrift WO 2005/084504 A1 ist ein Mixbecher bekannt, der an eine motorgetriebene Antriebseinheit ankuppelbar ist, um ein in dem Mixbecher angeordnetes Werkzeug rotierend anzutreiben. Der Mixbecher kann mit einem Deckel verschlossen werden. Wenn das Werkzeug des Mixbechers von der Antriebseinheit in Rotation versetzt werden könnte, obwohl der Deckel nicht auf dem Mixbecher angebracht ist, bestünde die Gefahr, dass ein Benutzer in den Mixbecher hineingreift und sich an dem rotierenden Werkzeug verletzt.

Um eine Verletzung zu verhindern, ist der bekannte Mixbecher mit einer Schutzeinrichtung ausgestattet, die unterbinden soll, dass die Antriebseinheit in Betrieb gesetzt werden kann, wenn der Deckel nicht an dem Mixbecher angebracht ist. Die Schutzeinrichtung umfasst ein längliches Übertragungsmittel, das vom oberen Rand des Mixbechers durch seinen Griff bis zu seinem unteren Rand verläuft. Am Deckel ist ein Zapfen angeordnet, der das Übertragungsmittel gegen die Kraft einer Rückstellfeder nach unten drückt, wenn der Deckel aufgesetzt ist. Dadurch fährt ein am unteren Ende des Übertragungsmittels angebrachter hakenförmiger Vorsprung aus. Der Vorsprung wirkt so mit der Antriebseinheit zusammen, dass ein vorher blockierter Hebel an der Antriebseinrichtung freigegeben wird. Wenn der Benutzer den Hebel nun betätigt, kann der Motor der Antriebseinheit in Gang gesetzt werden. Gleichzeitig wirkt der Hebel mit einem weiteren Element zusammen, das den hakenförmigen Vorsprung ergreift und weiter nach unten zieht. Hierdurch wird das Übertragungsmittel ebenfalls weiter nach unten gezogen, und der Zapfen am Deckel entlastet.

Auch die DE 1 179 674 B offenbart einen gattungsaemäßen mit einem Deckel verschließbaren Zubereitungsbecher, der an eine Antriebseinheit ankuppelbar ist, und eine Schutzeinrichtung aufweist.

### Der Erfindung zugrundeliegende Aufgabe

An dem bekannten Schutzeinrichtung kann es nachteilig sein, dass er kompliziert aufgebaut und zu handhaben ist. Insbesondere muss nach dem Aufsetzen des Mixbechers und Deckels noch der Hebel betätigt werden. Eine Aufgabe des Hebels ist es, das Übertragungsmittel herunterzuziehen, damit der Zapfen am Deckel - und mit ihm der Deckel - entlastet wird und nicht durch die Kraft der Rückstellfeder nach oben gedrückt wird. Experimente haben gezeigt, dass ein Druck nach oben beim Deckel Dichtigkeitsprobleme hervorrufen kann.

Folglich liegt der Erfindung die Aufgabe zugrunde, eine Schutzeinrichtung bereitzustellen, die einfacher konstruiert und handhabbar ist und dennoch keine Dichtigkeitsprobleme am Deckel verursacht.

### Erfindungsgemäße Lösung

Zu Lösung der Aufgabe lehrt die Erfindung einen Zubereitungsbecher mit den Merkmalen des Anspruchs 1.

Die Richtungsangaben in der Vorliegenden Beschreibung und den Ansprüchen beziehen sich auf die Ausrichtung des erfindungsgemäßen Zubereitungsbechers bei normalem Gebrauch.

Dadurch, dass das Tastelement durch den Deckel nicht vertikal, wie beim Stand der Technik, sondern horizontal verlagert wird, kann mit der Erfindung erreicht werden, dass der Deckel vorteilhaft nicht nach oben gedrückt wird. Die Erfindung kann so Dichtigkeitsprobleme vermeiden. Eine spezielle Einrichtung, die die Schutzeinrichtung nach unten zieht, um den Deckel zu entlasten ist nicht notwendig.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Das bevorzugte Übertragungselement verläuft durch einen Griff des Zubereitungsbechers.

Vorzugsweise entsprich der Winkel der Verlagerungsrichtung des Tastelements im Wesentlichen dem Winkel, mit dem ein Griff des Zubereitungsbechers an den oberen Bereich des Bechers ansetzt. Durch diese Ausführung der Erfindung kann vorteilhaft erreicht werden, dass das Tastelement beim Anbringen des Deckels in das obere Griffende einfährt bzw. beim Entfernen des Deckels von dort ausfährt.

Vorzugsweise ist das Tastelement in eine Richtung verlagerbar, die einen Winkel von weniger als 60 Grad, besonders vorzugsweise zwischen 40 und 50 Grad, z.B. 45 Grad mit der Horizontalen einschließt. Mit anderen Worten, in der besonders bevorzugten Ausführung der Erfindung sind der horizontale und der vertikale Anteil der Verlagerung etwa gleich groß. Die bevorzugte Verlagerung des Tastelements verläuft beim Anbringen des Deckels in eine Richtung nach unten und nach außen. Es sind aber auch Ausführungen der Erfindung denkbar, bei denen die Verlagerung des Tastelements nur in horizontaler Richtung erfolgt.

Erfindungsgemäβ wird der horizontale Anteil der Verlagerung des Tastelements durch das Übertragungselement in eine im wesentlichen vertikale Verlagerung des Betätigungselements umgesetzt. Vorzugsweise fährt das Betätigungselement durch das Aufsetzen des Deckels senkrecht nach unten aus. Hierdurch kann vorteilhaft erreicht werden, dass das Betätigungselement ein Erfassungselement auf der Oberseite der Antriebseinheit niederdrücken kann, um anzuzeigen, dass der Deckel angebracht ist.

Das Übertragungselement ist vorzugsweise elastisch. es kann zum Beispiel ein elastischer Streifen oder Draht sein, z.B. aus Polypropylen (PP), einem anderen Kunststoff oder aus Metall. Ein bevorzugter Streifen ist zwischen 0,5 und 3 Zentimeter, besonders vorzugsweise zwischen 1 und 2 Zentimeter breit, z.B. 1,5 Zentimeter. Ein bevorzugter Streifen ist zwischen 0,5 und 3 Millimeter dick, besonders vorzugsweise zwischen1 bis 2 Millimeter dick, z.B. 1,5 Millimeter. Das Übertragungselement kann auch ein Spirale sein, z.B. eine Drahtspirale. Das Tastelement, das Übertragungselement und das Betätigungselement sind vorzugsweise einstückig ausgeführt, wobei besonders vorzugsweise das Tastelement und das Betätigungselement von den Enden des Übertragungselements gebildet werden. Diese Ausführung vereinfacht die Herstellung der Schutzeinrichtung.

Der Deckel ist vorzugsweise durch eine Drehbewegung am Zubereitungsbecher anbringbar. Dazu können am Zubereitungsbecher z.B. ein Gewinde, Zapfen oder Nuten vorgesehen sein, damit dar Deckel z.B. durch einen Schraub- oder Bajonettmechanismus anbringbar ist. Ein bevorzugtes Tastelement ist mit einer Schräge versehen, an der ein Vorsprung des Deckels entlang gleiten kann, um das Tastelement horizontal zu verlagern. Vorzugsweise korrespondiert die Schräge mit einem Vorsprung am Deckel derart, dass der Vorsprung über eine Breite des Tastelements an der Schräge vorbeigleitet, und das Tastelement dabei im Wesentlichen kontinuierlich verschiebt. Es sind auch Ausführungen der Erfindung denkbar, bei denen außerdem oder alternativ der Vorsprung am Deckel mit einer Schräge versehen ist, die an dem Rastelement vorbeigleitet und das Tastelement dabei im Wesentlichen kontinuierlich verschiebt.

Vorzugsweise ist an der Schutzeinrichtung ein Rückstellelement vorgesehen, um sie bei Entfernen des Deckels in eine Ausgangsstellung zurückzufahren. Das bevorzugte Rückstellelement ist eine Schraubenfeder, die an dem Übertragungselement angreift, um es allgemein nach oben vorzuspannen, sodass das Betätigungselement in der Ruhelage der Schutzeinrichtung eingefahren und das Tastelement ausgefahren ist. In einer bevorzugten Ausführung der Erfindung ist das Tastelement mit einer Einkerbung versehen, in die ein Vorsprung des Deckels gegen die Kraft des Rückstellelements einrasten kann. Hierdurch kann einem Benutzer durch das Einrasten vorteilhaft angezeigt werden, dass der Deckel ordnungsgemäß verschlossen ist. Besonders vorzugsweise ist die Einkerbung auf der oben angesprochenen Schräge vorgesehen und so angeordnet, dass der Vorsprung, der die Schräge entlang gleiten kann auch in die Kerbe einrasten kann.

Bei einer bevorzugten Ausführung der Erfindung kann das Werkzeug durch eine Öffnung im Sockel des Zubereitungsbechers lösbar angebracht werden. Das Werkzeug kann zum Beispiel durch einen Schraubmechanismus oder einen Bajonettverschluss anbringbar sein. Vorzugsweise ist am Zubereitungsbecher eine Rasteinrichtung vorgesehen, um durch ein Einrasten anzuzeigen, dass das Werkzeug ordnungsgemäß angebracht ist. Es sind auch Ausführungen der Erfindung denkbar, bei denen am Zubereitungsbecher und am Werkzeug korrespondierende Markierungen angebracht sind, um anzuzeigen, dass das Werkzeug ordnungsgemäß angebracht ist.

Ein bevorzugter Zubereitungsbecher ist mit einer Küchenmaschine als Antriebseinheit ankupperlbar.

### Kurzbeschreibung der Zeichnungen

Die Erfindung wird im Folgenden anhand einer schematischen Zeichnung an einem Ausführungsbeispiel mit weiteren Einzelheiten näher erläutert.

Es zeigt:

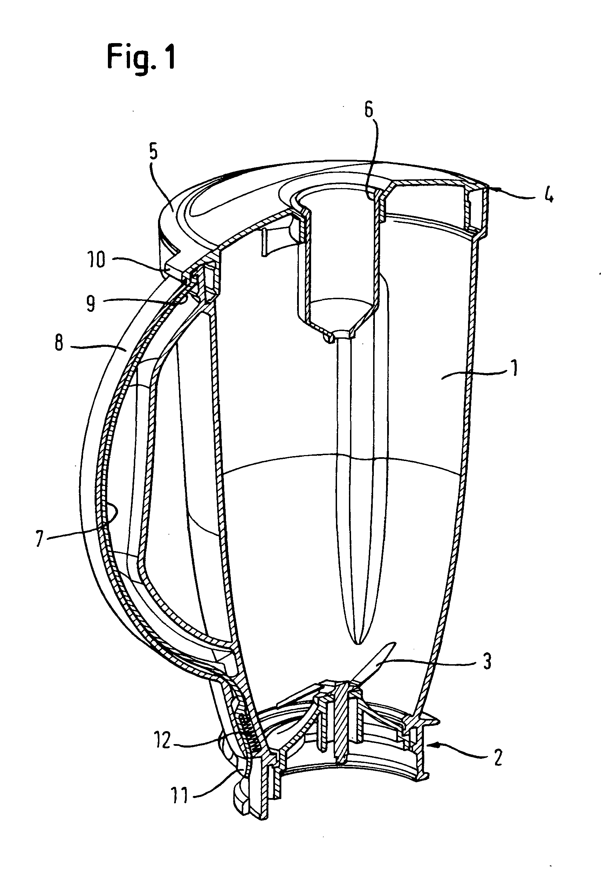

- Fig. 1:: Eine perspektivische Aufrissansicht einer erfindungsgemäßen Küchenmaschine mit geschlossenem Deckel.

### Ausführliche Beschreibung eines Ausführungsbeispiels

Der in den Figuren dargestellte Zubereitungsbecher 1 ist an seinem Sockel 2 an eine motorisierte Antriebseinheit (nicht dargestellt) ankuppelbar, um das Werkzeug 3 rotierend anzutreiben. Die obere Öffnung 4 des Zubereitungsbechers 1 kann mit einem aufschraubbaren Deckel 5 verschlossen werden. Dazu weist der Deckel 5 ein Schraubgewinde und der Zubereitungsbecher 1 korrespondierende Zapfen auf, die in das Gewinde des Deckels 5 greifen. In dem Deckel 5 befindet sich eine weitere, mit einem weiteren Deckel 6 verschließbare Zuführöffnung, durch die während das Werkzeug rotiert weitere Zutaten in den Zubereitungsbecher gegeben werden können.

Um zu verhindern, dass das Werkzeug 3 bei abgenommenem Deckel 5 betrieben werden kann, ist der Zubereitungsbecher 1 mit einer Schutzeinrichtung 5 ausgestattet, die in dem Griff 8 vom oberen Rand des Zubereitungsbechers 1 bis zu seinem Sockel 2 verläuft. Die Schutzeinrichtung umfasst einen länglichen Streifen 7 aus Polypropylen, dessen oberes Ende 9 als Tastelement in einem Winkel von ca. 45 Grad aus dem Griff 8 austritt. Der Streifen ist elastisch und passt sich dem geschwungenen Verlauf des Griffs 8 an, wobei er an der konkaven Innenfläche des Griffs 8 anliegt. Das Ende 9 des Streifens 7 ist leicht abgeschrägt. Ein Vorsprung 10 ist am Deckel so angebracht, dass er beim Schließen des Deckels 5 entlang der Schräge des oberen Endes 9 des Polypropylenstreifens entlang gleitet und dabei den Streifen 7 nach außen und unten verschiebt. Dies hat zur Folge, dass das untere Ende 11 des Streifens 7, das ein Betätigungselement bildet, dort aus dem Griff ausfährt. Der Streifen 7 ist im sockelnahen Bereich des Griffs 8 so geführt, dass ein unteres Ende 11 senkrecht nach unten ausfährt. Wenn der Sockel 2 des Zubereitungsbechers 1 an eine Antriebseinheit angekoppelt ist, drückt das ausgefahrene untere Ende 11 des Streifens ein Erfassungselement der Antriebseinheit nieder, um anzuzeigen dass der Deckel 5 ordnungsgemäß aufsitzt.

In der Nähe des Sockels 2 befindet sich außerdem eine Schraubenfeder 12, die den Streifen 7 nach oben vorspannt. Dadurch ist sichergestellt, dass der untere Teil des Streifens beim Entfernen des Deckels 5 wieder einfährt. Außerdem ist an der Schräge des oberen Endes 9 des Streifens 7 eine Kerbe angebracht, in die der Vorsprung 10 des Deckels 5 gegen die Kraft der Feder einrastet, wenn der Deckel vollständig verschlossen ist, um dem Benutzer anzuzeigen, dass der Zubereitungsbecher 1 jetzt betriebsbereit ist.

Das Werkzeug 3 ist durch eine Schraubverbindung am Sockel 2 lösbar angebracht, sodass es bei Bedarf, zum Beispiel zu Reinigungszwecken, abgenommen werden kann. korrespondierende Markierungen sind am Werkzeug 3 und Sockel 2 so angebracht, dass sie nebeneinander zu liegen kommen, wenn das Werkzeug 3 ordnungsgemäß in den Sockel 2 eingeschraubt ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die Erfindung stellt einen Zubereitungsbecher 1 zur Verfügung, der einen Benutzer vor Verletzungen schützt, einfach konstruiert ist und Undichtigkeiten des Deckels 5 vermeidet.

## Patentansprüche

1. Zubereitungsbecher (1), insbesondere für die Zubereitung von Lebensmitteln in der Küche, der an eine Antriebseinheit ankuppelbar ist, um ein Werkzeug (3) in dem Zubereitungsbecher (1) rotierend anzutreiben, der mit einem Deckel (5) verschließbar ist, und der eine Schutzeinrichtung umfasst, mit einem Tastelement (9) in der Nähe einer oberen Öffnung (4) des Zubereitungsbechers (1), einem Betätigungselement (11) in der Nähe eines Sockels (2) des Zubereitungsbechers (1) und einem Übertragungselement (7), das eine Verlagerung des Tastelements (9) in eine Verlagerung des Betätigungselements (11) umsetzt, **dadurch gekennzeichnet, dass** das Tastelement (9) in eine Richtung mit einem horizontalen Anteil verlagerbar ist und der horizontale Anteil der Verlagerung des Tastelements (9) durch das Übertragungselement (7) in eine Verlagerung des Betätigungselements (11) umsetzbar ist,
wobei der horizontale Anteil der Verlagerung des Tastelements (9) durch das Übertragungselement (7) in eine im wesentlichen vertikale Verlagerung des Betätigungselements (11) umsetzbar ist.

2. Zubereitungsbecher (1) nach Anspruch 1, **dadurch gekennzeichnet, dass** das Übertragungselement (7) durch einen Griff (8) des Zubereitungsbechers verläuft.

3. Zubereitungsbecher (1) nach einem der vorherigen Ansprüche, **dadurch gekennzeichnet, dass** der Winkel der Verlagerungsrichtung des Tastelements (9) im Wesentlichen der Winkel ist, mit dem ein Griff (8) des Zubereitungsbechers an den oberen Bereich des Zubereitungsbechers (1) ansetzt.

4. Zubereitungsbecher (1) nach einem der vorherigen Ansprüche, **dadurch gekennzeichnet, dass** das Betätigungselement (11) ein Vorsprung ist, der durch das Anbringen des Deckels (5) nach unten ausfahrbar ist.

5. Zubereitungsbecher (1) nach einem der vorherigen Ansprüche, **dadurch gekennzeichnet, dass** das Übertragungselement (7) elastisch ist.

6. Zubereitungsbecher (1) nach einem der vorherigen Ansprüche, **dadurch gekennzeichnet, dass** Tastelement (9), Übertragungselement (7) und Betätigungselement (11) einstückig verbunden sind.

7. Zubereitungsbecher (1) nach einem der vorherigen Ansprüche, **dadurch gekennzeichnet, dass** das Tastelement (9) mit einer Schräge versehen ist, an der ein Vorsprung (10) des Deckels (5) entlang gleiten kann, um das Tastelement (9) horizontal zu verlagern.

8. Zubereitungsbecher (1) nach einem der vorherigen Ansprüche **dadurch gekennzeichnet, dass** ein Rückstellelement (12) vorgesehen ist, um die Schutzeinrichtung bei Entfernen des Deckels (5) in eine Ausgangsstellung zurückzufahren.

9. Zubereitungsbecher (1) nach Anspruch 7, **dadurch gekennzeichnet, dass** das Tastelement (9) mit einer Einkerbung versehen ist, in die ein Vorsprung des Deckels (5) gegen die Kraft des Rückstellelements (12) einrasten kann.

10. Zubereitungsbecher (1) nach einem der vorherigen Ansprüche **dadurch gekennzeichnet, dass** das Werkzeug (3) durch eine Öffnung im Sockel (2) des Zubereitungsbechers (1) lösbar angebracht werden kann und am Zubereitungsbecher (1) eine Rasteinrichtung vorgesehen ist, um durch ein Einrasten anzuzeigen, dass das Werkzeug (3) ordnungsgemäß angebracht ist.

## Claims

1. Preparation jug (1), particularly for the preparation of foodstuffs in the kitchen, which can be coupled to a drive unit in order to rotationally drive a tool (3) in the preparation jug (1), which is closable by a lid (5) and which comprises a protective device with a contact element (9) in the vicinity of an upper opening (4) of the preparation jug (1), an actuating element (11) in the vicinity of a base (2) of the preparation jug (1) and a transmission element (7) which converts a displacement of the contact element (9) into a displacement of the actuating element (11), **characterised in that** the contact element (9) is displaceable in a direction with a horizontal component and the horizontal component of the displacement of the contact element (9) is convertible by the transmission element (7) into a displacement of the actuating element (11), wherein the horizontal component of the displacement of the contact element (9) is convertible by the transmission element (7) into a substantially vertical displacement of the actuating element (11).

2. Preparation jug (1) according to claim 1, **characterised in that** the transmission element (7) runs through a handle (8) of the preparation jug.

3. Preparation jug (1) according to one of the preceding claims, **characterised in that** the angle of the displacement direction of the contact element (9) is substantially the angle at which a handle (8) of the preparation jug is attached to the upper region of the preparation jug (1).

4. Preparation jug (1) according to any one of the preceding claims, **characterised in that** the actuating element (11) is a projection which is movable downwardly by the mounting of the lid (5).

5. Preparation jug (1) according to any one of the preceding claims, **characterised in that** the transmission element (7) is resilient.

6. Preparation jug (1) according to any one of the preceding claims, **characterised in that** the contact element (9), transmission element (7) and actuating element (11) are integrally connected.

7. Preparation jug (1) according to any one of the preceding claims, **characterised in that** the contact element (9) is provided with a chamfer along which a projection (10) of the lid (5) can slide in order to horizontally displace the contact element (9).

8. Preparation jug (1) according to any one of the preceding claims, **characterised in that** a restoring element (12) is provided in order to move the protective device back into a starting setting when the lid (5) is removed.

9. Preparation jug (1) according to any one of the preceding claims, **characterised in that** the contact element (9) is provided with a notch in which a projection of the lid (5) can detent against the force of the restoring element (12).

10. Preparation jug (1) according to claim 7, **characterised in that** the tool (3) can be detachably mounted via an opening in the base (2) of the preparation jug (1) and a detent device is provided at the preparation jug (1) in order to indicate by detenting that the tool (3) is correctly mounted.

## Revendications

1. Récipient de préparation (1), en particulier pour la préparation de produits alimentaires dans la cuisine, qui peut être rattaché à une unité d'entraînement, afin d'entraîner un outil (3) de façon rotative dans le récipient de préparation (1), qui peut être fermé avec un couvercle (5), et qui comprend un dispositif de protection, doté d'un élément palpeur (9) à proximité d'une ouverture (4) supérieure du récipient de préparation (1), d'un élément d'actionnement (11) à proximité d'un socle (2) du récipient de préparation (1) et d'un élément de transmission (7), qui convertit un déplacement de l'élément palpeur (9) en un déplacement de l'élément d'actionnement (11), **caractérisé en ce que** l'élément palpeur (9) peut être déplacé dans une direction avec une partie horizontale et la partie horizontale du déplacement de l'élément palpeur (9) peut être convertie par l'élément de transmission (7) en un déplacement de l'élément d'actionnement (11),
la partie horizontale du déplacement de l'élément palpeur (9) pouvant être convertie par l'élément de transmission (7) en un déplacement sensiblement vertical de l'élément d'actionnement (11).

2. Récipient de préparation (1) selon la revendication 1, **caractérisé en ce que** l'élément de transmission (7) passe par une poignée (8) du récipient de préparation.

3. Récipient de préparation (1) selon l'une des revendications précédentes, **caractérisé en ce que** l'angle de la direction de déplacement de l'élément palpeur (9) est sensiblement l'angle, avec lequel une poignée (8) du récipient de préparation est appliquée sur la zone supérieure du récipient de préparation (1).

4. Récipient de préparation (1) selon l'une des revendications précédentes, **caractérisé en ce que** l'élément d'actionnement (11) est une saillie, qui peut être sortie par la mise en place du couvercle (5) vers le bas.

5. Récipient de préparation (1) selon l'une des revendications précédentes, **caractérisé en ce que** l'élément de transmission (7) est élastique.

6. Récipient de préparation (1) selon l'une des revendications précédentes, **caractérisé en ce que** l'élément palpeur (9), l'élément de transmission (7) et l'élément d'actionnement (11) sont reliés d'une seule pièce.

7. Récipient de préparation (1) selon l'une des revendications précédentes, **caractérisé en ce que** l'élément palpeur (9) est doté d'un chanfrein, le long duquel une saillie (10) du couvercle (5) peut glisser, afin de déplacer horizontalement l'élément palpeur (9).

8. Récipient de préparation (1) selon l'une des revendications précédentes, **caractérisé en ce qu'**un élément de rappel (12) est prévu pour reculer le dispositif de protection, lors de l'enlèvement du couvercle (5) dans une position initiale.

9. Récipient de préparation (1) selon la revendication 7, **caractérisé en ce que** l'élément palpeur (9) est doté d'une entaille, dans laquelle une saillie du couvercle (5) peut s'encliqueter contre la force de l'élément de rappel (12).

10. Récipient de préparation (1) selon l'une des revendications précédentes, **caractérisé en ce que** l'outil (3) peut être placé de façon amovible à travers une ouverture pratiquée dans le socle (2) du récipient de préparation (1) et un dispositif d'encliquetage est prévu sur le récipient de préparation (1), afin d'indiquer par un encliquetage que l'outil (3) est placé de façon correcte.
